# EUROPEAN PATENT SPECIFICATION

(11) **EP 3 063 440 B1**
(45) Date of publication and mention of the grant of the patent: **09.01.2019**
(21) Application number: 14857704.2
(22) Date of filing: 29.10.2014
(51) Int. Cl.: F16K 1/42, F16K 1/46

(54) **VALVE SEAT, SEALING GASKET AND PRESSURE VALVE**
VENTILSITZ, DICHTUNG UND DRUCKVENTIL
SIÈGE DE SOUPAPE, GARNITURE D'ÉTANCHÉITÉ ET SOUPAPE DE PRESSION

(30) Priority: 29.10.2013 CN 201320699158 U
(43) Date of publication of application: 07.09.2016
(73) Proprietor: Emerson Process Management Regulator Technologies, Inc., McKinney, TX 75070 (US)
(72) Inventor: LIU, Dan, Chengdu Sichuan 610045 (CN)
(74) Representative: Cabinet Laurent & Charras
(86) International application number: PCT/IB2014/003003
(87) International publication number: WO 2015/063612

(56) References cited:
- CN-U- 201 621 317
- CN-U- 201 772 096
- CN-U- 201 992 106
- CN-U- 202 302 123
- CN-U- 203 571 079
- DE-B- 1 104 776
- DE-C- 535 731
- FR-A5- 2 209 433
- GB-A- 229 481
- GB-A- 1 373 818
- GB-A- 1 380 410
- JP-A- 2000 028 014
- US-A- 4 474 208
- US-A- 5 794 917

## Description

### Technical Field

The present disclosure relates to a valve seat arrangement for use with process control valves, a process control valve having such a valve seat arrangement, and a method of making such a valve seat arrangement.

### Technical Background

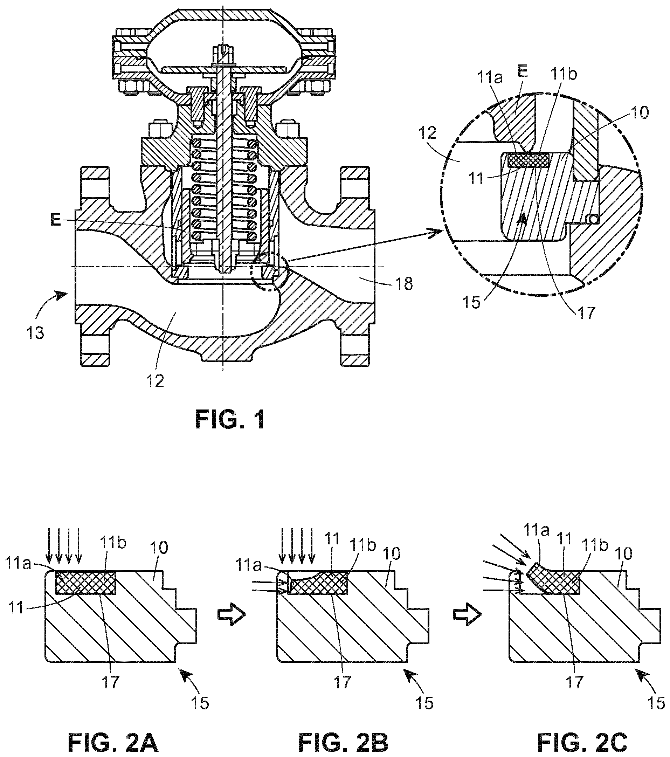

Generally, a process control valve 13 includes a valve seat arrangement 15. Example of solutions involving control valve are disclosed in document DE1104776B, US4474202A and FR2209433. Typically, the process control valve is open at times and closed at times, with Fig. 1 showing the process control valve 13 in a closed position. The valve seat arrangement 15 of Fig. 1 includes a valve seat body 10 and a sealing gasket 11. Generally, the valve seat body 10 is made of a metallic material, and the sealing gasket 11 is made of a nonmetallic material, such as an elastomeric material with a certain rebound elasticity. Under normal circumstances, the sealing gasket 11 is disposed in a groove 17 formed in the valve seat body 10, and is tightly adhered and attached onto the valve seat body 10. When the valve is in the open position, the sealing gasket 11 is in contact with process medium flowing through the process control valve 13, and hence the valve seat arrangement 15, including the sealing gasket 11, needs to bear the pressure of the process medium. On the other hand, when the process control valve 15 is closed, part of the sealing gasket 11 is in contact with process medium on the upstream side 12, thus bearing the inlet pressure of the process medium. When the inlet pressure on the upstream side 12 is high, an upstream portion 11a of the sealing gasket 11 has to withstand the high pressure, while a downstream portion 11b is only exposed to outlet pressure on a downstream side 18. When the process control valve 13 is closed, the sealing gasket 11, and the upstream portion 11a, is exposed to the process medium and bears static pressure. Thus, obvious elastic deformation is produced. However, because the valve seat
body 10 is made of the metallic material, the valve seat body is not deformed under pressure. When the pressure of the medium is high, the sealing gasket 11, especially the upstream portion 11a, may be deformed, deflected, or otherwise shifted or torn away from a contact position with groove 17 of the valve seat body 10 (for example, see Fig. 2A, Fig. 2B and Fig. 2C), thus causing potential leakage between the flow control element E and the valve seat arrangement 15.

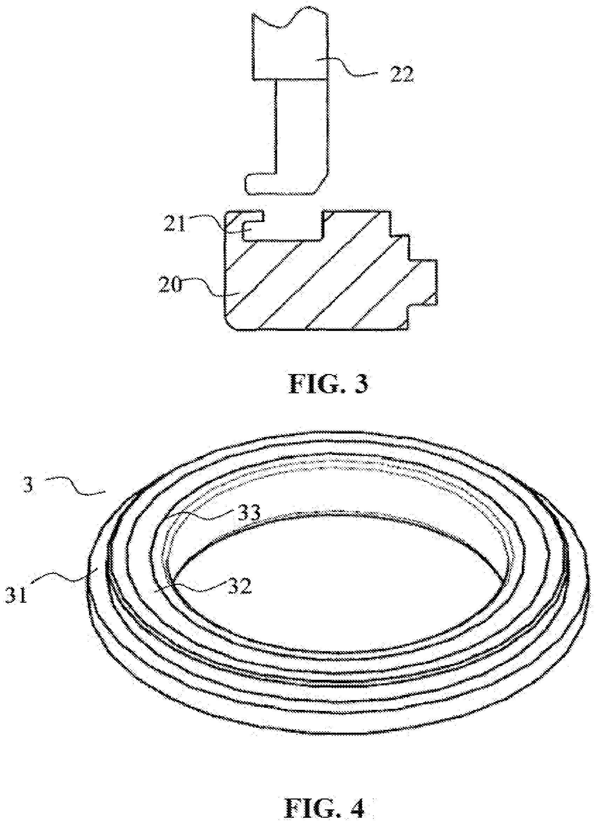

On such a background, those skilled in the art have attempted to make an improvement. As shown in Fig.3, a partial schematic view of another valve seat arrangement includes a valve seat body 20 and a groove 21 on the valve seat body 20. The groove 21 is a horizontal groove which is cut or otherwise formed to one side in a radial direction. When a sealing gasket is assembled in the groove, the area available for adhering and attaching the sealing gasket to the valve seat body 20 can be increased. Hence, the compression area of the sealing gasket is decreased, the sealing gasket is not easily torn away or otherwise deformed or deflected and thereby damaged, and thus the valve seat is prevented from leaking under a high pressure. However, during the machining of the valve seat with the design, an internal groove cutter 22 needs to be used. If the size of the notch of the valve seat is small, machining cannot be conducted.

Therefore, existing valve seats need to be improved, so as to achieve the goals of convenience in machining and lower cost on the premise that the sealing performance of the valve seat under a high pressure is improved.

### Summary of the Disclosure

One aspect of the present disclosure provides a valve seat, which has the advantages that a sealing gasket of the valve seat is not easily torn away from a valve seat body under a high pressure to cause leakage, has a simple structure, and can be conveniently machined while avoiding machining interference.
The present invention is a process control valve as defined in the claims. The process control valve of the present invention comprises an inlet chamber for containing a high-pressure medium, an outlet chamber for containing a low-pressure medium, a control element (43) arranged between the inlet chamber and the outlet chamber, and a valve seat assembly.

Said valve seat includes a valve seat body having an inner side and an outer side, a groove, used for containing a sealing gasket having an inner side and an outer side, is arranged on said valve seat body, and at least one side of said groove is sunken inwards into an inclined groove shape and more precisely at least a portion of the groove is sunken into the valve seat body at an angle relative to a radius (R) of the valve seat body .

Said groove of the valve seat includes a first part and a second part that together form an angle, wherein said first part is an inclined groove which is inclined downwards toward the inner side of said valve seat body, and said second part is a horizontal groove.

Preferably, said groove of the valve seat includes a first part and a second part that together form an angle, wherein said first part of said groove is an inclined groove which is inclined downwards respectively on both the inner and the outer sides of said valve seat body, and said second part is a horizontal groove.

Preferably, the longitudinal section of the first part of said groove of the valve seat is in the shape of an inclined rectangle, triangle, or semicircle.

Preferably, said sealing gasket of the valve seat is made of a nonmetallic material.

Preferably, said sealing gasket of the valve seat is made of rubber, plastic, or graphite.

Preferably, said valve seat body of the valve seat is made of a metallic material.

Another aspect of the present disclosure provides a sealing gasket which is contained in a groove of any of the foregoing valve seats, wherein the shape of said sealing gasket is consistent with the shape of said groove.

Another aspect of the present disclosure provides a pressure valve, which includes any of the foregoing valve seats.

The design of the groove of the valve seat of the present disclosure enables the valve seat to have a better sealing performance, as the sealing gasket is not easily torn away from the valve seat body under a high pressure (thereby causing leakage). Moreover, the design structure of the groove of the valve seat is simple, a turning tool can be used for direct machining, the valve seat can be conveniently machined, and machining interference can be avoided.

Further, the first part of the groove of the valve seat of the present disclosure can be inclined downwards to one side or both sides of said valve seat body; on the basis of convenient machining, the adhering and attaching area of said sealing gasket and said valve seat body can be increased and the sealing gasket is prevented from being torn away in a manner that causes leakage.

The shape of the sealing gasket of the present disclosure is consistent with the shape of the groove on said valve seat body, fully fills said groove, and is matched with said valve seat body to play a role of a soft seal.

The valve seat of the present disclosure substantially solves the technical problem of tight closing of the valve under a high pressure. Moreover, the high-pressure sealing reliability of the soft seal valve seat is also improved, the structure of the valve seat is simple, the valve seat can be conveniently machined, the manufacturing cost is low, and the valve seat can be widely applied to valves which need to be tightly closed.

### Brief Description of the Drawings

Fig. 1 is a schematic view, including a partial enlargement, of a valve and a valve seat of the prior art;
Fig. 2A, Fig. 2B, and Fig. 2C are partial views of the valve seat shown in Fig.1;
Fig. 3 is a partial schematic view of another valve seat in the prior art;
Fig. 4 is a perspective view of a valve seat of one embodiment of the present disclosure;
Fig. 5 is a sectional view of the valve seat shown in Fig. 4;
Fig. 6 is a sectional view of a valve seat of another embodiment of the present disclosure;
Fig. 7 is a partial schematic view of a valve seat body of the valve seat shown in Fig.6;
Fig. 8 is a partial schematic view of the valve seat shown in Fig. 6;
Fig. 9A and Fig.9B illustrate the process of machining the valve seat body of Figs. 6-8; and
Fig. 10 is a schematic view, including a partial enlargement, of a pressure valve of one embodiment of the present disclosure.

### Detailed Description of the Drawings

The following will describe the preferable embodiments with reference to the drawings which illustrate examples of embodiments of the present invention. It may be appreciated that other embodiments may be used, or some structural or logical changes may be possible.

A valve seat provided by one aspect of the present disclosure includes a valve seat body, a groove, used for containing a sealing gasket, is arranged on said valve seat body, and at least one side of said groove is sunken inwards into an inclined groove shape. When said groove and said sealing gasket are in an assembled state, most of the area of said sealing gasket is in said groove; thus, the compression area of said sealing gasket is decreased, the adhering and attaching area of the sealing gasket and said valve seat body is simultaneously increased, and the sealing gasket is prevented from being damaged under a high pressure, which would cause a poor sealing performance and leakage. At the same time, the structure of said valve seat with the inclined groove structure is simple and the valve seat can be conveniently machined.

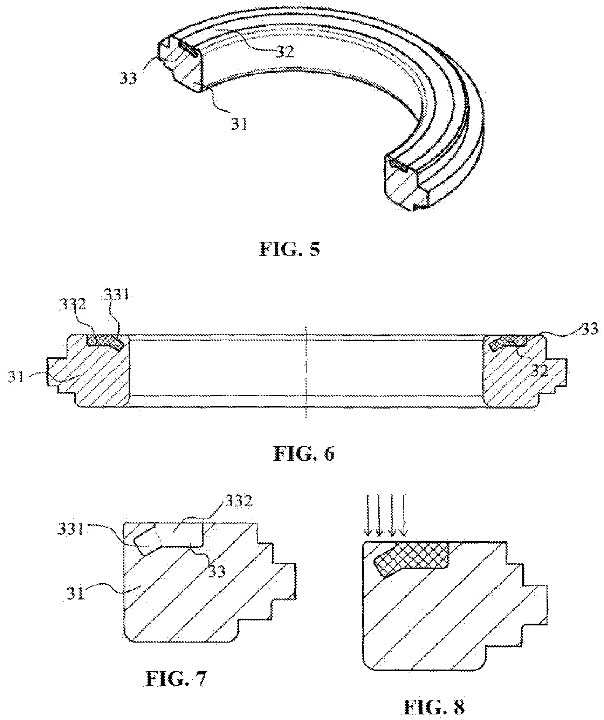

Figs. 4 and 5 show a valve seat 3 constructed according to one embodiment of the present disclosure. The valve seat 3 includes a valve seat body 31 and a sealing gasket 32 in the valve seat body 31. The valve seat 3 can be matched with a control element 43 to realize the opening and the closing of the process control valve 15, and said sealing gasket 32 is used for realizing soft sealing of the valve seat. Specifically, an annular groove 33 is arranged on said valve seat body 31, said sealing gasket 32 is arranged in said groove 33, wherein the shape of said sealing gasket 32 is consistent with the shape of said groove 33. Said sealing gasket 32 is tightly adhered in said groove 33, and the upper surface of said sealing gasket bears medium pressure. As illustrated in Fig. 5, said groove 33 is provided with an inclined groove which is inclined towards the internal part of the valve seat body 31, such that the adhering and attaching area of said sealing gasket 32 and said valve seat body 31 is increased, the compression area of the sealing gasket 32 in said groove 33 is simultaneously decreased, the part of the sealing gasket 32 on a high-pressure side is wrapped in said groove 33, said sealing gasket 32 is prevented from being damaged under a high pressure in a manner that would cause leakage, the groove can be conveniently designed and machined, and the machining cost can be reduced.

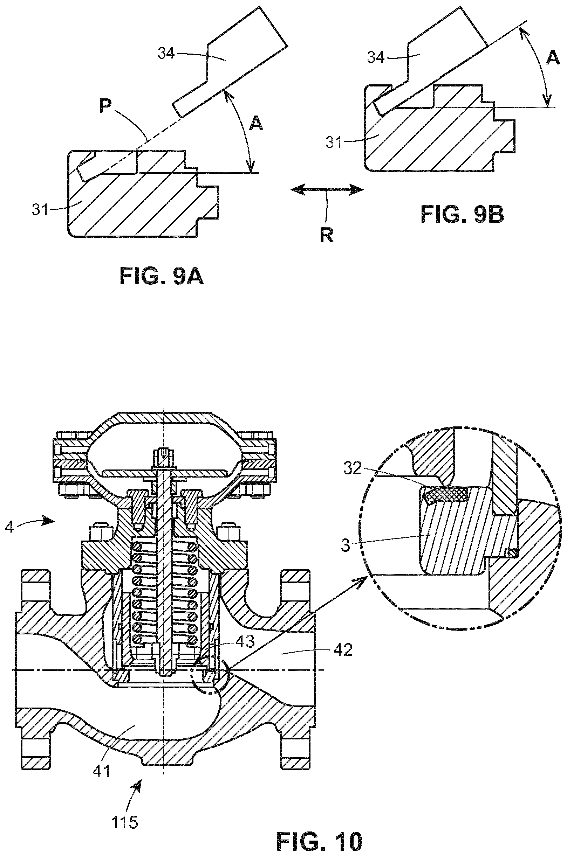

Specifically, Fig. 6 shows a sectional view of said valve seat 3, wherein the groove 33 on said valve seat body 31 includes a first part 331 and a second part 332. Said first part 331 is an inclined groove which is inclined downwards on one side of said valve seat body, and said second part 332 is a horizontal groove oriented parallel to a radial direction R (see, for example, Figs. 9A and 9B). Said sealing gasket 32 is tightly adhered in the groove 33 on said valve seat body 31; thus, the adhering and attaching area of said sealing gasket 32 and said valve seat body 31 is increased, and the sealing gasket 32 is not easily damaged under a high pressure. When a valve port is closed, if the inner side of the sealing gasket 32 is in contact with a high-pressure medium, because the groove 33 on the valve seat body 31 is provided with the inclined groove which extends towards the inner side of the internal part of the valve seat body 31, the sealing gasket 32 on the high-pressure side is wrapped in the groove 33, the compression area of the sealing gasket 32 is decreased and the sealing gasket 32 is prevented from being damaged in a manner that would cause leakage. Optionally, when the outer side of said sealing gasket 32 is in contact with the high-pressure medium, the groove 33 on said valve seat body 31 can extend towards the outer side of the internal part of the valve seat body 31 to enable the sealing gasket 32 on the high-pressure side to be wrapped in the groove 33.

Fig. 7 shows a partial view of the valve seat body 31, wherein said groove 33 includes a first part 331, which obliquely extends towards the internal part of said valve seat body 31, and a second part 332, which horizontally extends towards the valve seat body 31. Said second part 332 can be a rectangular inclined groove which is inclined downwards, wherein the inclined groove can be machined by using a groove cutter on a common lathe, a machining tool is not interfered, a special forming process is not needed, and the machining cost is not increased.

The section of said second part 332 in the embodiment is in the shape of a rectangle. It should be understood that, in order to facilitate machining, the section of said second part can also be in other shapes such as a triangle or semicircle which are easily machined.

Optionally, said first part 331 can also extend towards the both sides of the internal part of the valve seat body, thus increasing the adhering area of said sealing gasket 32 and said valve seat body 31, and the inclined groove 33 can be conveniently designed and machined.

Fig. 8 shows a partial view of the valve seat body 31 and the sealing gasket 32 under a high pressure. Since the valve seat body 31 is generally made of a metallic material and said sealing gasket 32 is an elastic rubber product, when the high-pressure side of said sealing gasket 32 is fully wrapped in said groove, the compression area of the sealing gasket 32 can be decreased, the adhering and attaching area of the sealing gasket 32 and the valve seat body 31 is simultaneously increased, and the sealing gasket 32 is prevented from being torn off under the high pressure, which would cause leakage.

Fig. 9A and Fig. 9B show the process of machining the valve seat body 31 of the present disclosure. In Fig. 9A, the inclined groove of said valve seat body 31 can allow a cutter 34 to be fed and retracted along the angle of a feeding path P (as shown by a dotted line in the figure), the design of the inclined groove on said valve seat body 31 enables the feeding path and the cutter itself not be intersected with the valve seat body 31 except by way of the inclined groove, and thus no machining interference is caused. Fig. 9B shows the cutter 34 which is in a state of opening the inclined groove in the valve seat body 31. The angle of the inclined groove is also the angle A of the feeding path of the cutter, and specifically, the angle of the inclined groove can be determined according to the size of the opening of the groove. The valve seat with the design can be machined through a common lathe and a common groove cutter, and the cost is low.

Another embodiment of the present disclosure features a sealing gasket. The sealing gasket is matched with the valve seat in the embodiment described above to enable said valve seat to have higher soft sealing performance. Specifically, said sealing gasket is contained in the groove of said valve seat, the shape of the sealing gasket is adaptively consistent with the shape of the groove of said valve seat, and said sealing gasket is tightly adhered in said groove. The shape of said groove enables the adhering area of said sealing gasket and the groove to be increased, the high pressing bearing area is simultaneously decreased, and the sealing performance of the product is improved.

Further, said sealing gasket can be made of a nonmetallic material such as rubber, plastic, polyurethane, graphite or asbestos, which has a better sealing performance.

Another embodiment of the present disclosure features a pressure valve including any of the valve seats described above. The pressure valve can be used for applications where tight closing is needed, the technical problem of high-pressure tight closing of the valve is solved, and the soft sealing reliability of the soft seal valve seat is greatly improved. Fig.10 shows a partial schematic view of a pressure valve 4 including said valve seat 3. Said pressure valve 4 includes an inlet chamber 41, an outlet chamber 42, and a control element E assembly which is arranged between said inlet chamber 41 and said outlet chamber 42, wherein said control element assembly includes the valve seat 3 and a control element 43. When said pressure valve 4 is in a working state, said inlet chamber 41 contains high-pressure medium; when said control element 43 and said valve seat 3 are matched to close the valve, the top end of said spool 43 is in contact with the sealing gasket on said valve seat 3 to achieve a sealing effect, one part of the sealing gasket 32 on said valve seat 3 is in contact with the high-pressure medium in the inlet chamber 41 and bears a high pressure, and the other part of the sealing gasket 32 is in contact with a low-pressure medium in the outlet chamber; at the moment, one end of the sealing gasket on the high-pressure side is inwards sunken into the internal part of said valve seat 3, thus the contact area of the sealing gasket and the high-pressure medium is smaller, phenomena such as damage do not occur as easily, and said pressure valve is prevented from leaking.

Optionally, the groove of said valve seat 3 can also be provided with downwards inclined grooves on both sides, such that both sides of the sealing gasket are enabled to be wrapped in said valve seat, the compression area of the sealing gasket is further decreased, the adhering and attaching area of the sealing gasket and the valve seat is increased, and thus the sealing gasket is enabled not to be easily torn away from the valve seat, which would cause leakage.

On one hand, the pressure valve of the present disclosure solves the technical problem of high-pressure tight closing of the valve and simultaneously improves the reliability of the soft seal valve seat under a high pressure; on the other hand, the valve seat of the pressure valve of the present disclosure also has the advantages of offering a simple structure, convenience in machining, low cost, and is suitable for batch production.

Even though terms such as 'first', 'second' and 'third' can be used herein for describing various elements, components or parts, these elements, components or parts should not be limited by these terms; these terms may be only used for distinguishing an element, a component or a part. When terms such as 'first', 'second' and other numerical terms are used herein, unless otherwise clearly specified in the context, the terms do not contain any sequence or order.

## Claims

1. A process control valve (4, 13) with a valve seat assembly, the process control valve comprising:
an inlet chamber (41) for containing a high-pressure medium;
an outlet chamber (42) for containing a low-pressure medium;
a control element (43) arranged between the inlet chamber and the outlet chamber; and
a valve seat assembly (3) comprising:
a valve seat body (31) having an inner side and an outer side;
a groove (33) formed in the valve seat body; and
a sealing gasket (32) arranged in the groove, the sealing gasket (32) having an inner side and an outer side;
wherein at least a portion of the groove is sunken into the valve seat body at an angle relative to a radius (R) of the valve seat body, and wherein the groove comprises a first part (331) and a second part (332) angled relative to the first part, the first part (331) is inclined downwards toward the inner side of the valve seat body (31) and the second part (332) is oriented parallel to the radius (R) of the valve seat body (31) and the second part is a horizontal groove;
wherein the inner side of the sealing gasket (32) is wrapped in the groove (33), and the shape of the sealing gasket (32) is consistent with the shape of the groove (33), the sealing gasket (32) being tightly adhered in the groove (33) **characterised in that** the upper surface of the sealing gasket bears medium pressure.

2. The process control valve according to any of the preceding claims, wherein the first part (331) of the groove (33) is inclined downwards respectively toward both the inner side of the valve seat body and the outer side of the valve seat body.

3. The process control valve according to any of the preceding claims, wherein a longitudinal section of the first part (331) of the groove (33) is in the shape of an inclined rectangle, triangle or semicircle.

4. The process control valve according to any of the preceding claims, wherein the sealing gasket (32) is made of a nonmetallic material.

5. The process control valve according to any of the preceding claims, wherein the sealing gasket (32) is made of rubber, plastic or graphite.

6. The process control valve according to any of the preceding claims, wherein the valve seat body (31) is made of a metallic material.

7. The process control valve according to any of the preceding claims, wherein the sealing gasket (32) conforms to the shape of the groove (33).

## Patentansprüche

1. Ein Prozesssteuerungsventil (4, 13), mit einer Ventilsitzeinheit, wobei das Prozesssteuerungsventil umfasst:
eine Einlasskammer (41) zur Aufnahme eines Hochdruckmediums;
eine Auslasskammer (42) zur Aufnahme eines Niederdruckmediums;
ein Kontrollelement (43), das zwischen der Einlasskammer und der Auslasskammer angeordnet ist;
und
eine Ventilsitzeinheit (3), umfassend:
einen Ventilsitzkörper (31) mit einer Innenseite und einer Außenseite;
eine Nut (33), die im Ventilsitzkörper gebildet ist; und
eine Dichtung (32), die in der Nut angeordnet ist, wobei die Dichtung (32) eine Innenseite und eine Außenseite hat;
wobei mindestens ein Abschnitt der Nut in den Ventilsitzkörper mit einem Winkel relativ zum Radius (R) des Ventilsitzkörpers eingelassen ist, und
wobei die Nut einen ersten Teil (331) und einen zweiten Teil (332), der zum ersten Teil abgewinkelt ist, umfasst, wobei der erste Teil (331) nach unten, zur Innenseite des Ventilsitzkörpers (31) geneigt ist und wobei der zweite Teil (332) ist parallel zum Radius (R) des Ventilsitzkörpers (31) ausgerichtet ist und wobei es sich beim zweiten Abschnitt um eine horizontale Nut handelt;
wobei die Innenseite der Dichtung (32) in der Nut (33) untergebracht ist, und wobei die Form der Dichtung (32) zur Form der Nut (33) passt, wobei die Dichtung (32) dabei fest in die Nut (33) eingepresst ist,
**dadurch gekennzeichnet, dass** auf der oberen Fläche der Dichtung ein Mitteldruck aufliegt.

2. Prozesssteuerungsventil gemäß einem der vorangehenden Ansprüche, wobei der erste Teil (331) der Nut (33) nach abwärts jeweils sowohl zur Innenseite des Ventilsitzkörpers und zur Außenseite des Ventilsitzkörpers geneigt ist.

3. Prozesssteuerungsventil gemäß einem der vorangehenden Ansprüche, wobei ein Längsabschnitt des ersten Teils (331) der Nut (33) die Form eines geneigten Rechtecks, Dreiecks oder Halbkreises hat.

4. Prozesssteuerungsventil gemäß einem der vorangehenden Ansprüche, wobei die Dichtung (32) aus einem nichtmetallischen Material besteht.

5. Prozesssteuerungsventil gemäß einem der vorangehenden Ansprüche, wobei die Dichtung (32) aus Gummi, Kunststoff oder Graphit besteht.

6. Prozesssteuerungsventil gemäß einem der vorangehenden Ansprüche, wobei der Ventilsitzkörper (31) aus Metall besteht.

7. Prozesssteuerungsventil gemäß einem der vorangehenden Ansprüche, wobei die Dichtung (32) sich an die Form der Nut (33) anpasst.

## Revendications

1. Soupape de régulation de procédé (4, 13) dotée d'un ensemble siège de soupape, la soupape de régulation de procédé comprenant :
une chambre d'entrée (41) pour contenir un milieu à haute pression ;
une chambre de sortie (42) pour contenir un milieu à basse pression ;
un élément de régulation (43) agencé entre la chambre d'entrée et la chambre de sortie ; et
un ensemble siège de soupape (3) comprenant :
un corps de siège de soupape (31) ayant un côté intérieur et un côté extérieur ;
une rainure (33) formée dans le corps de siège de soupape ; et
une garniture d'étanchéité (32) agencée dans la rainure, la garniture d'étanchéité (32) ayant un côté intérieur et un côté extérieur ;
dans laquelle au moins une portion de la rainure est enchâssée dans le corps de siège de soupape à un angle par rapport à un rayon (R) du corps de siège de soupape, et
dans laquelle
la rainure comprend une première partie (331) et une seconde partie (332) présentant un angle par rapport à la première partie, la première partie (331) est inclinée vers le bas vers le côté intérieur du corps de siège de soupape (31) et la seconde partie (332) est orientée parallèlement au rayon (R) du corps de siège de soupape (31) et la seconde partie est une rainure horizontale ;
dans laquelle le côté intérieur de la garniture d'étanchéité (32) est enroulé dans la rainure (33), et la forme de la garniture d'étanchéité (32) est concordante avec la forme de la rainure (33), la garniture d'étanchéité (32) étant disposée de manière fermement adhérente dans la rainure (33)
**caractérisée en ce que** la surface supérieure de la garniture d'étanchéité résiste à la pression du milieu.

2. Soupape de régulation de procédé selon l'une quelconque des revendications précédentes, dans laquelle la première partie (331) de la rainure (33) est inclinée vers le bas respectivement vers à la fois le côté intérieur du corps de siège de soupape et le côté extérieur du corps de siège de soupape.

3. Soupape de régulation de procédé selon l'une quelconque des revendications précédentes, dans laquelle une section longitudinale de la première partie (331) de la rainure (33) est sous la forme d'un rectangle, d'un triangle ou d'un demi-cercle incliné.

4. Soupape de régulation de procédé selon l'une quelconque des revendications précédentes, dans laquelle la garniture d'étanchéité (32) est faite d'un matériau non métallique.

5. Soupape de régulation de procédé selon l'une quelconque des revendications précédentes, dans laquelle la garniture d'étanchéité (32) est faite de caoutchouc, de plastique ou de graphite.

6. Soupape de régulation de procédé selon l'une quelconque des revendications précédentes, dans laquelle le corps de siège de soupape (31) est fait d'un matériau métallique.

7. Soupape de régulation de procédé selon l'une quelconque des revendications précédentes, dans laquelle la garniture d'étanchéité (32) correspond à la forme de la rainure (33).
